**Europäisches Patentamt**

**European Patent Office**

**Office européen des brevets**

(19)

(11) Veröffentlichungsnummer: **0 188 664**
**B1**

(12) # EUROPÄISCHE PATENTSCHRIFT

(45) Veröffentlichungstag der Patentschrifft:
07.02.90

(21) Anmeldenummer: 85112442.0

(22) Anmeldetag: 02.10.85

(51) Int. Cl. $^5$: **F 16 C 33/22, F 16 C 33/10**

(54) Radialgleitlager.

(30) Priorität: 19.01.85 DE 3501731

(43) Veröffentlichungstag der Anmeldung:
30.07.86 Patentblatt 86/31

(45) Bekanntmachung des Hinweises auf die Patenterteilung:
07.02.90 Patentblatt 90/06

(84) Bennante Vertragsstaaten:
AT BE CH DE FR GB IT LI LU NL SE

(56) Entgegenhaltungen:
FR-A-1 485 799
GB-A-1 175 470
GB-A-1 517 160

(73) Patentinhaber: Kunststofftechnik Rodenberg GmbH &
Co KG
An der Ackersbeeke
D-3054 Rodenberg/Deister (DE)

(72) Erfinder: Pieper, Prof. Dr. Ing.
Langer Bruch 5
D-3005 Hannover/Hemmingen (DE)

(74) Vertreter: Gramm, Werner, Dipl.-Ing.
Patentanwälte Gramm + Lins Theodor-Heuss-Strasse 2
D-3300 Braunschweig (DE)

EP 0 188 664 B1

## Beschreibung

Die Erfindung betrifft ein hydrodynamisches Radialgleitlager zur Aufnahme einer Welle mit einer elastomeren Gleitschale, die sich an einer Stützlagerschale abstützt, und deren Gleitfläche die Welle längs deren vollen Umfang umschließt.

Eine derartige Ausführungsform läßt sich der GB-A-1 175 470 entnehmen. Offenbart ist ein Lager, dessen Kunststoffgleitschale durch in diese eingebettete, wellenförmig ausgebildete Federringe derart vorgespannt und verformt ist, daß die Gleitfläche mehrere, z. B. vier nach innen vorgewölbte Bereiche aufweist, die die eigentlichen Lagerflächen bilden, zwischen denen Vertiefungen vorgesehen sind, die nachfolgend als Lagertaschen bezeichnet werden. Die Gleitschale stützt sich über axial verlaufende Stege an einer Stützlagerschale ab, wobei zwischen den genannten Stegen Axialnuten gebildet sind. Durch diese Ausbildung soll bei einem Verschleiß der Lagerflächen eine selbständige Nachstellung der Lagerflächen, also eine automatische Verschleißkompensation erzielt werden. Dadurch soll eine praktisch spielfreie Lagerung über eine längere Standzeit gewährleistet sein. Zur Aufnahme einer bestimmten Lagerbelastung muß die Federvorspannung sehr hoch gewählt werden, da die tragenden Bereiche der Gleitfläche sehr schmal sind. Da die Federringe außerdem sehr stark gewölbt sein müssen, ergibt sich in Umfangsrichtung ein relativ steiler Druckgradient und daher eine geringe Schmierfilmdicke.

Das eingangs definierte Lager läuft bei vollrunder Ausbildung mit Vollschmierung bei flüssiger Reibung. Hierzu wird in der Schmierschicht ein so hoher Druck erzeugt, daß der Schmierfilm die Welle von der Gleitfläche abhebt. Der Schmierdruck wird von selbst durch Bildung eines Schmierflüssigkeitkeils erzeugt, in den das zugeführte Schmiermittel bei entsprechend hoher Relativgeschwindigkeit zwischen Welle und Gleitfläche so hineingezogen wird, daß sich die aufeinander gleitenden Teile durch den entstandenen Druckanstieg vollkommen voneinander trennen. Bei dem eingang erläuterten Gleitlager ergibt sich eine passive Einstellung der Druckverteilung. Diese Druckverteilung und damit auch die Wellenposition im Lager kann nicht durch Variation der Winkelgeschwindigkeit der Welle oder der Viskosität des Schmiermittels beeinflußt werden. Die Schmierfilmdruckverteilung stimmt bei relativ niedriger Elastizität der Lagerschale mit der Pressungsverteilung in der Lagerschale überein. Es bildet sich bei konstanter Belastungsrichtung und homogener Lagerschale immer nur ein Druckberg aus. Eingehende Untersuchungen haben zu der Erkenntnis geführt, daß die Ausbildung mehrerer Druckberge vorteilhaft sein kann. Der Erfindung liegt somit die Aufgabe zugrunde, ein Gleitlager der eingangs erläuterten Bauform mit passiver Einstellung der Druckverteilung von vornherein konstruktiv so zu gestalten, daß sich an gewünschten Umfangsabschnitten jeweils ein Druckberg bildet.

Diese Aufgabe wird erfindungsgemäß dadurch gelöst, daß die Gleitschale vollrund, d.h. ohne Lagertaschen ausgebildet ist und daß die ihr der Stützlagerschale gegenüber innewohnende Elastizität in Umfangsrichtung jeweils dort Abschnitte geringeren effektiven Werts - also Abschnitte, die unter Last ein geringeres Einfedern der Gleitschale gestatten - aufweist, wo die Bildung von Druckbergen in der Schmierschicht erwünscht ist.

Die FR-A-1 485 799 offenbart ein als elastisch bezeichnetes Gleitlager, in dessen aus Gummi oder synthetischem elastischen Werkstoff bestehende Gleitschale ein metallischer Stützring eingebettet ist. Die Gleitschale weist in ihrer Gleitfläche eine Vielzahl von dicht nebeneinander angeordneten Axialnuten auf, die zur Bildung von Schmiermittelpolstern dienen. Der Metallring führt zu einer über den Umfang gleichen effektiven Elastizität der Gleitfläche. Eine Druckbergfunktion ist den Abschnitten zwischen den Axialnuten nicht zugewiesen. Ein hydrodynamischer Druckaufbau wäre aber auch nicht möglich, da die nutzbaren Gleitbereiche zwischen zwei Axialnuten für einen wirksamen Druckaufbau in Umfangsrichtung erheblich zu schmal sind.

Aus der GB-A-1 517 160 geht ein gasgeschmiertes hydrodynamisches Gleitlager als bekannt hervor, bei dem zur Vermeidung von Halbfrequenzwirbeln eine ggf. dünnwandig ausgebildete Lagerschale durch elastisch ausgebildete Stützelemente elastisch aufgehängt ist. Bei dünnwandiger Ausführung dieser metallischen Lagerschale kann durch die Art der Einspannung der Stützelemente eine Verformung der Lagerschale stattfinden, die einen zumindest teilweisen hydrodynamischen Druckaufbau zwischen den Stützelementen ermöglicht. Auch hier werden somit zwischen den Stützelementen in Umfangsrichtung gesehen in der Gleitfläche der Lagerschale Vertiefungen erzeugt.

Bei einem erfindungsgemäß gestalteten Radialgleitlager mit einer konstanten Belastungsrichtung ist es zweckmäßig, wenn symmetrisch zur Belastungsrichtung zwei der genannten Abschnitte in der Tragzone angeordnet sind. Hierbei ist es vorteilhaft, wenn bei Schmierflüssigkeiten mit abrasiven Bestandteilen zwischen den beiden Abschnitten eine Schmiernut angeordnet ist.

In der einfachsten Form ist das erfindungsgemäße Lager also ausgeführt als Doppeldruckberg-Lager. Dies ist dann vorteilhaft, wenn eine einzige konstante Belastungsrichtung vorliegt. Durch die Doppel-Druckverteilung wird die Welle an zwei Stellen im Lager abgestützt. Dadurch ergibt sich zwar eine höhere maximale Flächenpressung in der Tragzone, jedoch werden das Anlaufdrehmoment und die Welleneinfederung wesentlich verringert. Derartige Lager sind für beide Drehrichtungen geeignet.

Als Schmierflüssigkeit kann bei dem erfindungsgemäßen Radialgleitlager Wasser verwendet werden.

Bei einem Radialgleitlager mit unbestimmter oder sich ändernder Lastrichtung können erfindungsgemäß mehrere, gleichmäßig über den Umfang verteilte Abschnitte geringerer Elastizität vorgesehen werden. Lager dieser Bauform lassen sich z. B. als Führungslager für vertikale Pumpen- oder Wasserturbinenwellen einsetzen.

Zur Bildung mehrerer Druckberge wird erfindungsgemäß also die Gummieinfederung der Elastomer-Gleitschale partiell verändert. In den Umfangsabschnitten, in denen sich ein Druckberg ausbilden soll, wird die Gummieinfederung verringert; vorgesehen ist hier also eine härtere Lauffläche. Dies läßt sich einmal erzielen durch entsprechende Materialwahl. Erfindungsgemäß ist es aber auch möglich, die Abschnitte geringerer Elastizität durch einen verringerten Materialquerschnitt der Elastomer-Gleitschale in diesem Bereich zu bilden.

Aus Fertigungsgründen kann es dann zweckmäßig sein, wenn jeder der genannten Abschnitte durch ein in die Stützlagerschale eingesetztes Segment gebildet ist, das gegenüber der Elastomer-Gleitschale eine geringere Elastizität bzw. größere Härte aufweist. Dabei können die z. B. aus Hartgummi oder Kunststoff bestehenden Segmente in entsprechende Aussparungen der Stützlagerschale eingespritzt sein.

In einer alternativen Ausführungsform ist es vorteilhaft, wenn jeder der genannten Abschnitte durch einen entsprechenden, in die Elastomer-Gleitschale eingreifenden Vorsprung der Stützlagerschale gebildet ist. Hierbei kann also auf separate Segmente verzichtet werden. Die genannten Vorsprünge können hinterschnitten sein, um eine feste Verbindung mit der Elastomer-Gleitschale sicherzustellen. Dann besteht aber auch die Möglichkeit, die Elastomer-Gleitschale zusammen mit der Stützlagerschale aus vorgefertigten Lagersegmenten zusammenzusetzen. Eine derartige Ausführungsform eignet sich vor allem für große Wasserturbinen als Wellenführungslager oder als Laufradspaltringlager.

Zur exakten Ausbildung der gewünschten Druckberge ist es vorteilhaft, wenn in den genannten Abschnitten die Stützfläche der Segmente bzw. Vorsprünge einen Kreisbogenabschnitt bildet. Dabei beträgt der Radius des Kreisbogenabschnittes etwa das 1 bis 1,4 fache des Durchmessers der aufzunehmenden Welle. Der Abrundungsradius kann variiert werden, um den Gradienten der Umfangsdruckverteilung und damit die Schmierspalthöhe zu beeinflussen.

In den genannten Abschnitten geringerer Elastizität beträgt die Verringerung des Materialquerschnitts, der sogenannte Versatz, etwa 3 bis 4 % des Durchmessers der aufzunehmenden Welle. Dabei ist der Versatz abhängig von der Lagergröße.

In der Zeichnung sind einige als Beispiel dienende Ausführungsformen der Erfindung schematisch dargestellt. Es zeigen:

Figur 1 ein Radialgleitlager mit einer konstanten Belastungsrichtung im Querschnitt;

Figur 2 einen Schnitt gemäß der Linie A - B in Figur 1;

Figur 3 die Druckverteilung in einem Radialgleitlager gemäß Figur 1 mit eingelegter Welle;

Figur 4 einen Schnitt gemäß der Linie A - B in Figur 3;

Figur 5 eine abgewandelte Ausführungsform in einer Darstellung gemäß Figur 1;

Figur 6 einen Schnitt gemäß der Linie A - B in Figur 5;

Figur 7 eine abgewandelte Ausführungsform für ein Radialgleitlager mit unbestimmter oder sich ändernder Lastrichtung;

Figur 8 einen Schnitt gemäß der Linie A - B in Figur 7 und

Figur 9 eine abgewandelte Ausführungsform in einer Darstellung gemäß Figur 7.

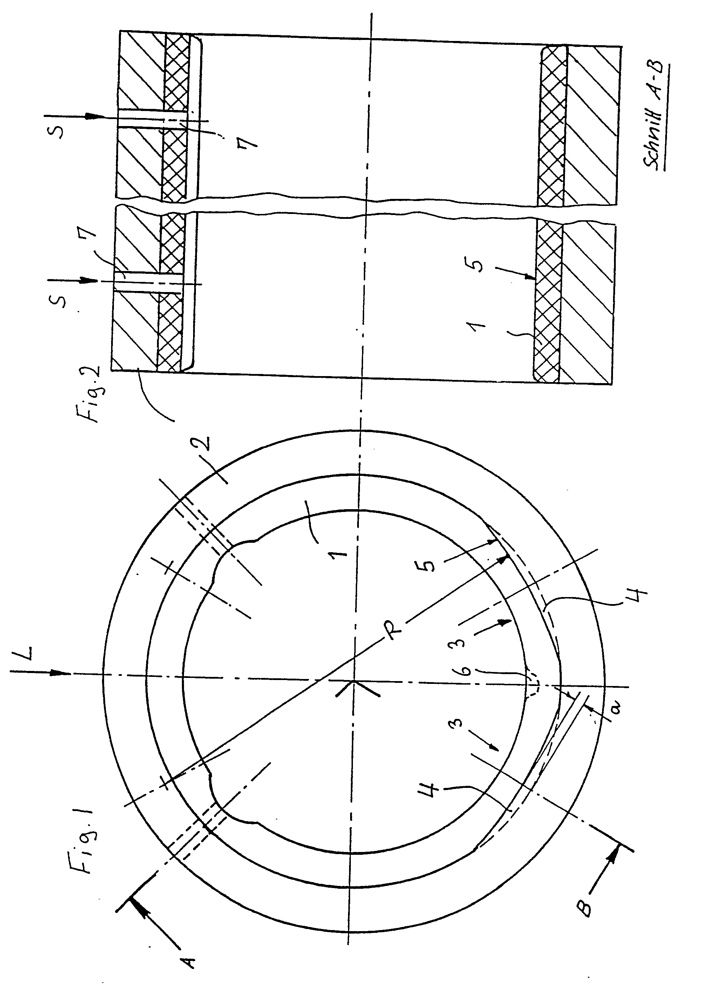

Figur 1 zeigt im Querschnitt ein hydrodynamisches, vollrundes Radialgleitlager mit vollumschließender Gleitfläche, die aus einer Elastomer-Gleitschale 1 besteht. Diese stützt sich an einer Stützlagerschale 2 ab. Es handelt sich um ein Radialgleitlager mit einer einzigen konstanten Belastungsrichtung L. Symmetrisch zu dieser Belastungsrichtung sind in der Tragzone des Lagers in der Elastomer-Gleitschale 1 zwei Abschnitte 3 mit einem verringerten Materialquerschnitt der Elastomer-Gleitschale 1 vorgesehen. Diese Verringerung des Materialquerschnitts ist in der Zeichnung dargestellt als Versatz a. Der verringerte Materialquerschnitt ergibt sich durch einen entsprechenden Vorsprung 4 der Stützlagerschale 2. Die Stützfläche 5 dieser beiden Vorsprünge 4 bildet jeweils einen Kreisbogenabschnitt mit einem Radius R.

Zwischen den beiden Abschnitten 3 geringeren Materialquerschnitts ist eine in axialer Richtung verlaufende Schmiernut 6 angeordnet. Figur 2 läßt zwei Schmierflüssigkeitsbohrungen 7 erkennen, durch die Schmierflüssigkeit, vorzugsweise Wasser, in das Lager eingeführt wird.

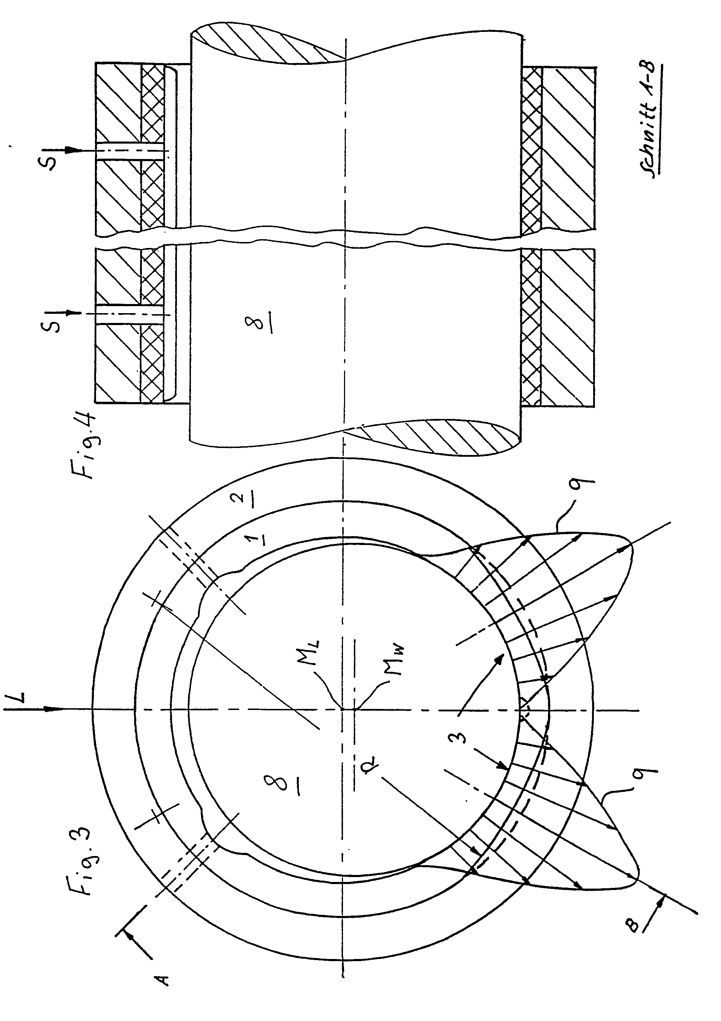

Die Darstellungen der Figuren 3 und 4 entsprechen denen der Figuren 1 und 2, wobei lediglich eine in das Lager eingelegte Welle 8 eingezeichnet ist. In Figur 3 gibt $M_L$ den Mittelpunkt des Lagers und $M_W$ den Mittelpunkt der Welle an. Es ist wiederum nur eine einzige Belastungsrichtung L vorgesehen. Im Bereich der beiden Abschnitte 3 geringeren Materialquerschnitts bilden sich die beiden eingezeichneten Druckberge 9. Der die Stützflächen 5 der beiden Vorsprünge 4 bildende Radius R beträgt etwa das 1 bis 1,4 fache des Durchmessers D der Welle 8.

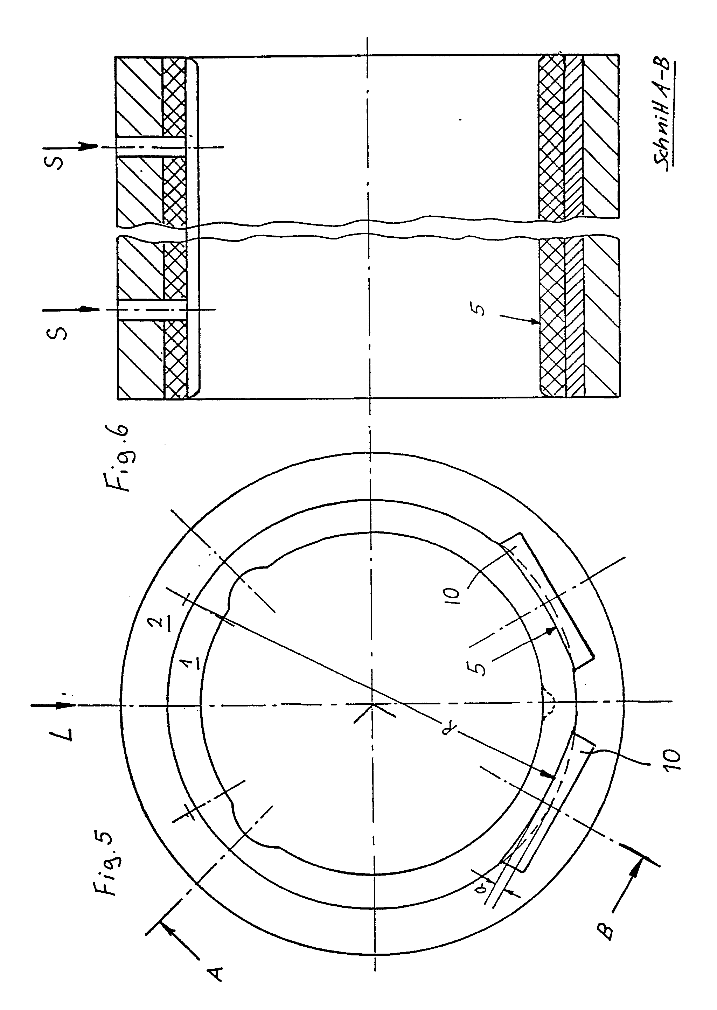

Bei der in den Figuren 5 und 6 dargestellten Ausführungsform ist ebenfalls nur eine konstante Belastungsrichtung L vorgesehen. Jedoch ergeben sich die Abschnitte 3 verringerten Querschnitts nicht durch Vorsprünge 4 der Stützlagerschale 2 gemäß Figur 1, sondern durch jeweils ein in die Stützlagerschale 2 eingesetztes Segment 10, das aus Hartgummi oder Kunststoff bestehen und in entsprechende Aussparungen der Stützlagerschale 2 eingespritzt werden kann. Im zweiten Arbeitsgang kann dann die eigentliche Elastomer-Gleitschale 1 eingebracht werden.

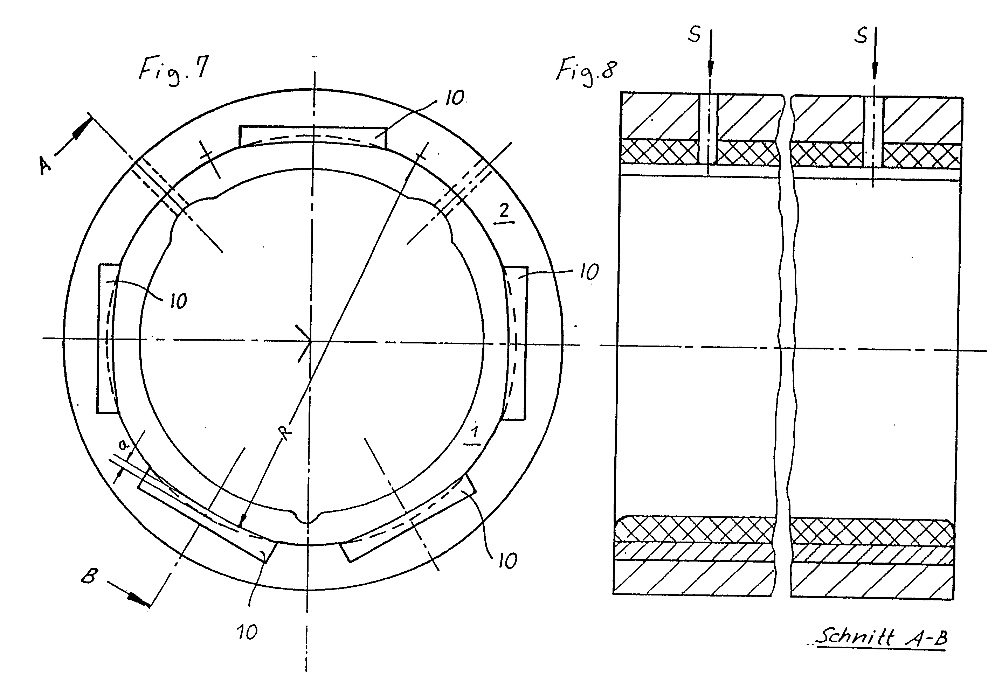

Die Konstruktion gemäß Figur 5 läßt sich auch auf ein Radialgleitlager mit unbestimmter oder sich ändernder Lastrichtung übertragen. Einen derartigen Lösungsvorschlag zeigen die Figuren 7 und 8. Hier sind mehrere gleichmäßig über den Umfang verteilte Abschnitte 3 geringerer Elastizität vorgesehen, die jeweils durch Segmente 10 gebildet sind.

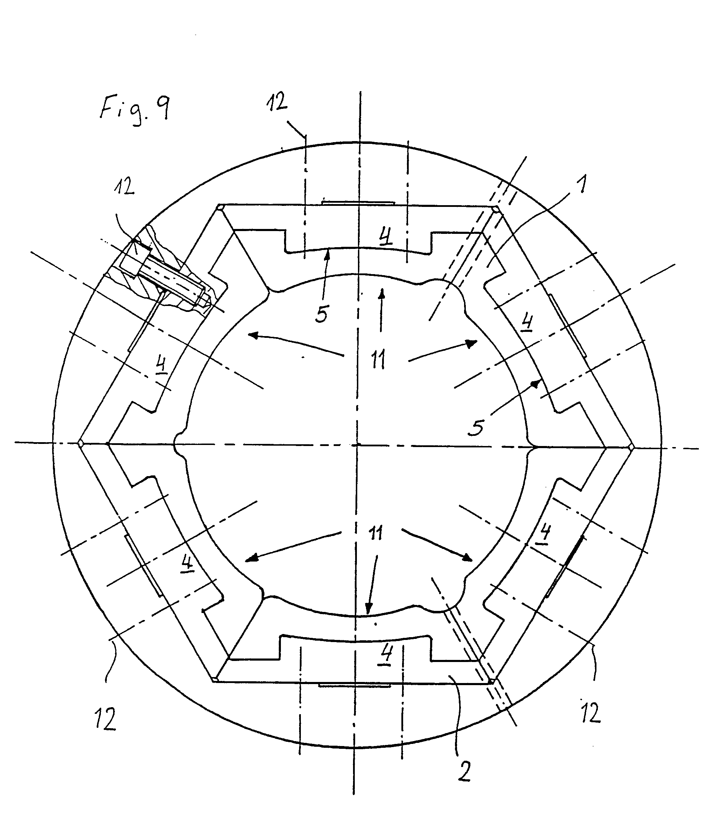

Die in Figur 9 dargestellte Alternativlösung entspricht hinsichtlich der Lagerbelastung der Ausführungsform gemäß Figur 7. Jedoch sind hier die Abschnitte 3 verringerten Querschnitts innerhalb der Elastomer-Gleitschale 1 wiederum gebildet durch Vorsprünge 4 der Stützlagerschale 2, wobei jedoch diese Vorsprünge 4 hinterschnitten ausgebildet sind und so eine feste Verbindung mit der Elastomer-Gleitschale 1 sicherstellen. Die Elastomer-Gleitschale 1 ist zusammen mit der Stützlagerschale 2 aus vorgefertigten Lagersegmenten 11 zusammengesetzt, die durch Schrauben 12 in ihrer Position fixiert werden können. Diese Konstruktion eignet sich insbesondere für große Wasserturbinen als Wellenführungslager oder als Laufradspaltringlager.

## Patentansprüche

1. Hydrodynamisches Radialgleitlager zur Aufnahme einer Welle (8) mit einer elastomeren Gleitschale (1), die sich an einer Stützlagerschale (2) abstützt, und deren Gleitfläche die Welle (8) längs deren vollen Umfang umschließt, *dadurch gekennzeichnet*, daß die Gleitschale (1) vollrund, d.h. ohne Lagertaschen ausgebildet ist und daß die ihr der Stützlagerschale (2) gegenüber innewohnende Elastizität in Umfangsrichtung jeweils dort Abschnitte (3) geringeren effektiven Werts - also Abschnitte, die unter Last ein geringeres Einfedern der Gleitschale (1) gestattenaufweist, wo die Bildung von Druckbergen (9) in der Schmierschicht erwünscht ist.

2. Radialgleitlager nach Anspruch 1, mit einer konstanten Belastungsrichtung (L), *dadurch gekennzeichnet*, daß symmetrisch zur Belastungsrichtung (L) zwei der genannten Abschnitte (3) in der Tragzone angeordnet sind.

3. Radialgleitlager nach Anspruch 2, *dadurch gekennzeichnet*, daß zwischen den beiden Abschnitten (3) eine Schmiernut (6) angeordnet ist.

4. Radialgleitlager nach Anspruch 1, mit unbestimmter oder sich ändernder Lastrichtung, *gekennzeichnet* durch mehrere gleichmäßig über den Umfang verteilte Abschnitte (3) geringerer Elastizität.

5. Radialgleitlager nach einem der vorhergehenden Ansprüche, *dadurch gekennzeichnet*, daß die Abschnitte (3) geringerer Elastizität durch einen verringerten Materialquerschnitt der Elastomer-Gleitschale (1) in diesem Bereich gebildet sind.

6. Radialgleitlager nach Anspruch 5, *dadurch gekennzeichnet*, daß jeder der genannten Abschnitte (3) durch ein in die Stützlagerschale (2) eingesetztes Segment (10) gebildet ist, das gegenüber der Elastomer-Gleitschale (1) eine geringere Elastizität bzw. größere Härte aufweist.

7. Radialgleitlager nach Anspruch 6, *dadurch gekennzeichnet*, daß die Segmente (10) in entsprechende Aussparungen der Stützlagerschale (2) eingespritzt sind.

8. Radialgleitlager nach Anspruch 6 oder 7, *dadurch gekennzeichnet*, daß die Segmente (10) aus Hartgummi oder Kunststoff bestehen.

9. Radialgleitlager nach Anspruch 5, *dadurch gekennzeichnet*, daß jeder der genannten Abschnitte (3) durch einen entsprechenden, in die Elastomer-Gleitschale (1) eingreifenden Vorsprung (4) der Stützlagerschale (2) gebildet ist.

10. Radialgleitlager nach Anspruch 9, *dadurch gekennzeichnet*, daß die Vorsprünge (4) hinterschnitten sind.

11. Radialgleitlager nach Anspruch 9 oder 10, *dadurch gekennzeichnet*, daß die Elastomer-Gleitschale (1) zusammen mit der Stützlagerschale (2) aus vorgefertigten Lagersegmenten (11) zusammengesetzt ist.

12. Radialgleitlager nach einem der Ansprüche 5 bis 11, *dadurch gekennzeichnet*, daß in den genannten Abschnitten (3) die Stützfläche (5) der Segmente (10) bzw. Vorsprünge (4) einen Kreisbogenabschnitt bildet.

13. Radialgleitlager nach Anspruch 12, *dadurch gekennzeichnet*, daß der Radius (R) des Kreisbogenabschnittes etwa das 1 bis 1,4fache des Durchmessers (D) der aufzunehmenden Welle (8) beträgt.

14. Radialgleitlager nach einem der Ansprüche 5 bis 13, *dadurch gekennzeichnet*, daß in den genannten Abschnitten (3) die Verringerung des Materialquerschnitts (Versatz a) etwa 3 bis 4 % des Durchmessers (D) der aufzunehmenden Welle (8) beträgt.

## Claims

1. Hydrodynamic radial plain bearing for receiving a shaft (8) with an elastomeric slide shell (1) supported on a support bearing shell (2), the slide surface of said slide shell encompassing the shaft (8) along its full circumference, *characterized in that* the slide shell (1) is formed fully round, i.e. without bearing pockets, and that its inherent elasticity relative to the support bearing shell (2) respectively has in circumferential direction sections (3) of lesser effective value - thus sections which permit a lesser inward resiliency of the slide shell (1) subject to load there where the formation of pressure peaks (9) in the lubrication layer is desired.

2. Radial plain bearing according to claim 1, with a constant loading direction (L), *characterized in that* two of said sections (3) are arranged in the carrying zone symmetrical relative to the loading direction (L).

3. Radial plain bearing according to claim 2, *characterized in that* a lubricating groove (6) is arranged between the two sections (3).

4. Radial plain bearing according to claim 1, with an indefinite or varying load direction, *characterized by* a plurality of uniformly circumferentially spaced sections (3) of lesser elasticity.

5. Radial plain bearing according to one of the preceding claims, *characterized in that* the sections (3) of lesser elasticity are formed by a reduced material cross-section of the elastomeric slide shell (1) in this region.

6. Radial plain bearing according to claim 5, *characterized in that* each of said sections (3) is formed by a segment (10) inserted into the support bearing shell (2), said segment having a lesser elasticity and a greater hardness, resp., in relationship to the elastomeric slide shell (1).

7. Radial plain bearing according to claim 6, *characterized in that* the segments (10) are injection-cast into corresponding recesses of the support bearing shell (2).

8. Radial plain bearing according to claim 6 or 7, *characterized in that* the segments (10) consist of hard rubber or plastic.

9. Radial plain bearing according to claim 5, *characterized in that* each of said sections (3) is formed by a corresponding projection (4) of the support bearing shell (2) interengaging the elastomeric slide shell (1).

10. Radial plain bearing according to claim 9, *characterized in that* the projections (4) are backcut.

11. Radial plain bearing according to claim 9 or 10, *characterized in that* the elastomeric slide shell (1) is composed of prefabricated bearing segments (11) together with the support bearing shell (2).

12. Radial plain bearing according to one of claims 5 to 11, *characterized in that* the support surface (5) of the segments (10) and projections (4), resp., defines a circular arc section in said sections (3).

13. Radial plain bearing according to claim 12, *characterized in that* the radius (R) of the circular arc section amounts to about the one to 1.4 multiple of the diameter (D) of the shaft (8) to be received.

14. Radial plain bearing according to one of claims 5 to 13, *characterized in that* in said sections (3) the reduction of the material cross-section (offsetting a) amounts to about 3 to 4 % of the diameter (D) of the shaft (8) to be received.

**Revendications**

1. Palier radial lisse hydrodynamique destiné à recevoir un arbre (8), comportant un coussinet lisse (1) en élastomère qui s'appuie contre un coussinet d'appui (2) et dont la surface lisse enserre l'arbre (8) le long de toute la périphérie de celui-ci, caractérisé en ce que le coussinet lisse (1) est conçu entièrement rond, c'est-à-dire sans poches, et en ce que l'élasticité propre que celui-ci possède vis-à-vis du coussinet d'appui (2) présente dans la direction périphérique des tronçons (3) de moindre valeur effective, c'est-à-dire des tronçons qui, sous charge, autorisent un plus faible cédage élastique du coussinet lisse (1), à l'endroit desquels on souhaite la formation de maxima de pression (9) dans la couche de lubrifiant.

2. Palier radial lisse selon la revendication 1, dont la charge a une direction constante (L), caractérisé en ce que deux tronçons (3) sont disposés dans la zone de portance, symétriquement par rapport à la direction (L) de la charge.

3. Palier radial lisse selon la revendication 2, caractérisé en ce qu'une rainure de lubrification (6) est disposée entre les deux tronçons (3).

4. Palier radial lisse selon la revendication 1, dont la charge a une direction indéterminée ou variable, caractérisé par plusieurs tronçons (3) de plus faible élasticité régulièrement répartis sur la périphérie.

5. Palier radial lisse selon l'une des revendications précédentes, caractérisé en ce que les tronçons (3) de plus faible élasticité sont formés par une moindre section du matériau du coussinet lisse (1) en élastomère dans cette zone.

6. Palier radial lisse selon la revendication 5, caractérisé en ce que chacun des tronçons (3) est formé par un segment (10) qui est inséré dans le coussinet d'appui (2) et qui, vis-à-vis du coussinet lisse (1) en élastomère, présente une élasticité plus faible ou une dureté plus grande.

7. Palier radial lisse selon la revendication 6, caractérisé en ce que les segments (10) sont injectés dans des évidements correspondants du coussinet d'appui (2).

8. Palier radial lisse selon la revendication 6 ou 7, caractérisé en ce que les segments (10) sont en caoutchouc dur ou en plastique.

9. Palier radial lisse selon la revendication 5, caractérisé en ce que chacun des tronçons (3) est formé par une saillie correspondante (4) du coussinet d'appui (2) qui empiète sur le coussinet lisse en élastomère (1).

10. Palier radial lisse selon la revendication 9, caractérisé en ce que les saillies (4) sont en contre-dépouille.

11. Palier radial lisse selon la revendication 9 ou 10, caractérisé en ce que le coussinet lisse en élastomère (1) est composé, comme le coussinet d'appui (2), de segments de coussinet préfabriqués (11).

12. Palier radial lisse selon l'une des revendications 5 à 11, caractérisé en ce que dans les tronçons (3), la surface d'appui (5) des segments (10) ou des saillies (4) forme un tronçon d'arc de cercle.

13. Palier radial lisse selon la revendication 12, caractérisé en ce que le rayon (R) du tronçon d'arc de cercle est compris environ entre 1 fois et 1,4 fois le diamètre (D) de l'arbre (8) à recevoir.

14. Palier radial lisse selon l'une des revendications 5 à 13, caractérisé en ce que, dans les tronçons (3), la diminution de la section du matériau (déport a) est comprise environ entre 3 et 4 % du diamètre (D) de l'arbre (8) à recevoir.

Fig.1

A

L

2

1

4    3    6  3    5

B

a

4

Fig.2

S          7          S

7

1    5

Schnitt A-B

EP 0 188 664 B1

Fig.4

Schnitt A-B

Fig.3

Fig. 6

Schnitt A-B

Fig. 5

Fig. 8 — Schnitt A-B

Fig. 7

Fig. 9